Europäisches Patentamt

European Patent Office

Office européen des brevets

(11) Veröffentlichungsnummer: **0 450 384 A2**

(12) **EUROPÄISCHE PATENTANMELDUNG**

(21) Anmeldenummer: **91104148.1**

(22) Anmeldetag: **18.03.91**

(51) Int. Cl.5: **G06F 1/16**

(30) Priorität: **02.04.90 DE 9003798 U**

(43) Veröffentlichungstag der Anmeldung:
**09.10.91 Patentblatt 91/41**

(84) Benannte Vertragsstaaten:
**AT BE CH DE DK ES FR GB IT LI NL SE**

(71) Anmelder: **Tappert, Karl-Heinz**
**Götscherweg 79a**
**W-4018 Langenfeld(DE)**

(72) Erfinder: **Tappert, Karl-Heinz**
**Götscherweg 79a**
**W-4018 Langenfeld(DE)**
Erfinder: **Solich, Erich**
**Hacketäuerstrasse 106**
**W-5650 Solingen(DE)**

(74) Vertreter: **Stratmann, Ernst, Dr.-Ing.**
**Schadowplatz 9**
**W-4000 Düsseldorf 1(DE)**

(54) **Computergehäuse in Modulbauweise.**

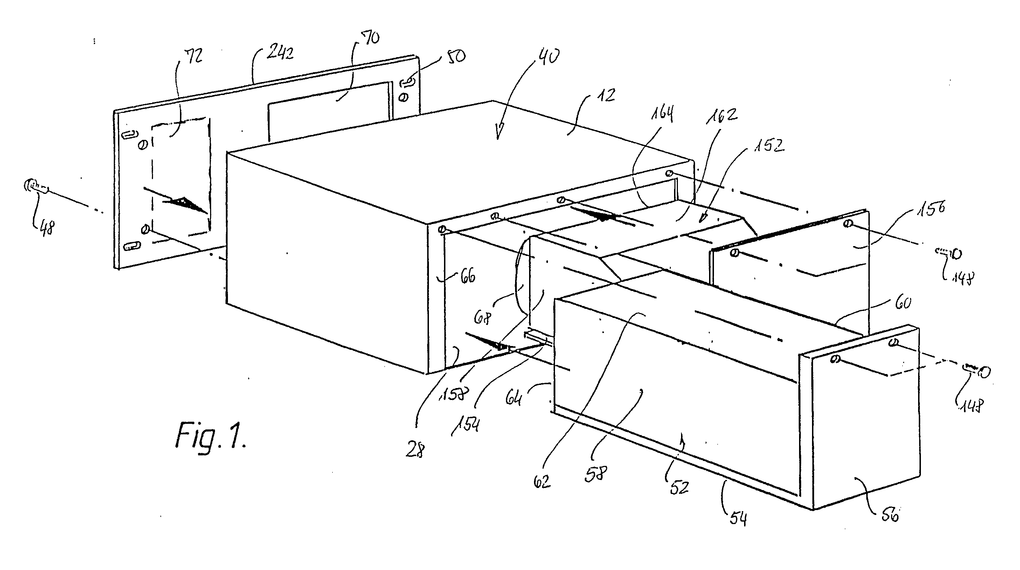

(57) Es wird eine Tisch-, Stand- oder Schrankcomputergehäuseanordnung mit ggf. getrennter Tastatur und Bildschirmeinrichtung beschrieben, bestehend aus mehreren, in einem Tisch-, Stand- oder Schrankgehäuse (Grundgehäuse) (12) untergebrachten Einheiten, wie Zentralrecheneinheit, Netzteileinheit, Laufwerkeinheit, Anzeigeeinheit, Lüftereinheit, Bedienungseinheit, Tastatureinheit, Lautsprechereinheit, und dgl., wobei erfindungsgemäß ein oder mehrere, in dem Grundgehäuse (12) untergebrachte Einheiten (wie beispielsweise Netzteileinheit, Recheneinheit, Laufwerkeinheit, Lüftereinheit, Bedienungseinheit) jeweils wieder in einem eigenen Gehäuse (Modulgehäuse) untergebracht sind, wobei das Grundgehäuse (12) so aufgebaut ist, daß das Modulgehäuse von zumindest zwei Seiten (wie Vorderseite und Rückseite) in das Grundgehäuse einschiebbar sind (Fig. 1), wobei das Grundgehäuse (12) die Schutz- und Sicherungsfunktion gegen Umwelteinflüsse und unbefugte Betätigung, und die Modulgehäuse die mechanische Befestigung für die einzelnen Bauelemente (wie Steckplatten, Laufwerke, Transformatoren) und Verdrahtungselemente (wie Kabel, Steckverbindungen) liefern, und wobei die in einem Modulgehäuse angeordnete Einheit so vollständig ausgestattet ist, daß ein Betrieb, wie Testbetrieb, unabhängig von anderen Einheiten oder dem Grundgehäuse durchgeführt werden kann.

Fig.1.

Die Erfindung betrifft einen Tisch-, Stand- oder Schrankcomputer mit getrennter Tastatur und Bildschirmeinrichtung, bestehend aus mehreren, in einem Tisch-, Stand- oder- Schrankgehäuse (Grundgehäuse) untergebrachten Einheiten, wie Zentralrecheneinheit, Netzteileinheit, Laufwerkeinheit, Anzeigeeinheit, Lüftereinheit, Tastatureinheit, Bedienungseinheit, Lautsprechereinheit und dgl..

Derzeit am Markt befindliche Tischcomputer, vorzugsweise handelt es sich dabei um sogenannte Personalcomputer, bestehen üblicherweise aus einem rechteckigen Kasten, auf dem oder neben dem eine in einem anderen Gehäuse untergebrachte Anzeige, z. B. Kathodenstrahlröhre, LCD-Display, Plasma-Bildschirm o. dgl. als Bildschirmeinrichtung angeordnet und über ein Kabel angeschlossen ist, und einer ebenfalls unabhängig vom Kasten aufstellbaren Tastatur, die gleichfalls über ein Kabel mit dem Kasten in Verbindung steht.

In diesem Kasten sind dann die verschiedenen noch notwendigen weiteren elektronischen Einrichtungen untergebracht, wie der eigentliche Mikroprozessor mit Speichereinrichtungen, wie Festplatte, Laufwerkeinrichtungen für "Floppys", ein Netzteil, ggf. Netzschalter und Sicherungseinrichtungen, aber auch ein Lautsprecher zur Erzeugung von als Bedienhinweis dienenden Sinustönen oder Geräuschen oder auch elektronisch erzeugter Sprache, Lüftereinrichtungen und was sonst noch an Zusatzeinrichtungen vorgesehen sein mag. Diese verschiedenen Einrichtungen sind meist auf einzelnen Steckkarten untergebracht, die über Steckleisten mit anderen im Gehäuse untergebrachten Teilen in Verbindung stehen und auch nur dann arbeiten, wenn diese Teile vorhanden sind und in korrekter elektrischer Verbindung zueinander stehen.

Diese Anordnung ist zwar insofern preiswert, als bestimmte elektronische Teile insgesamt nur einmal benötigt werden, andererseits wird das Überprüfen der einzelnen Steckkarten und sonstigen Bestandteile, die in dem Kasten untergebracht sind, durch diese Art der Bauweise erschwert. Ein weiterer Nachteil dieser gegenseitigen Abhängigkeit ist mangelnde Flexibilität bei Konstruktionsänderungen und bei Anpassung an unterschiedliche Aufgaben des Computers.

Aufgabe der Erfindung ist es, einen Tisch-, Stand- oder Schrankcomputer der eingangs genannten Art dahingehend weiterzubilden, daß er diese Nachteile nicht mehr aufweist und insbesondere sich hinsichtlich seiner einzelnen Bestandteile erheblicher einfacher überprüfen und warten läßt, was die Servicefreundlichkeit erhöht, außerdem leichter bei der Montage auf unterschiedliche Anforderungen zugeschnitten werden kann, was auch die Produktionskosten bei unterschiedlichen Versionen verringert und die Herstellung bestimmter Bestandteile in Form größerer Serien ermöglicht und daher auch auf diese Weise eine preiswertere Herstellung erlaubt. Schließlich soll auch eine nachträgliche Anpassung an neue Aufgabenstellungen ohne große Probleme möglich sein.

Gelöst wird diese Aufgabe dadurch, daß ein oder mehrere, in dem Grundgehäuse untergebrachte Einheiten jeweils wieder in einem eigenen Gehäuse (Modulgehäuse) untergebracht sind, wobei das Grundgehäuse so aufgebaut ist, daß das oder die Modulgehäuse von zumindest zwei Seiten (wie Vorderseite und Rückseite des Grundgehäuses) in das Grundgehäuse einschiebbar sind, wobei das Grundgehäuse die Schutz- und Sicherungsfunktion gegen Umwelteinflüsse und unbefugte Benutzung und die Modulgehäuse die mechanische Befestigung für die einzelnen Bauelemente (wie für Steckplatten, Laufwerke u. dgl.) und Verdrahtungselemente (wie Kabel, Steckverbindungen u. dgl.) liefern, und daß die in einem Modulgehäuse angeordnete Einheit so vollständig bestückt ist, daß ein Betrieb, wie Testbetrieb unabhängig von den anderen Einheiten bzw. dem Grundgehäuse möglich ist.

Durch diese Maßnahmen lassen sich zum einen die einzelnen Komponenten oder Einheiten eines Computers (oder eines ähnlichen elektronischen Gerätes, das hier mit "Computer" ebenfalls gemeint sein soll) außerhalb eines Grundgehäuses testen, was insofern Vorteile bringt, als alle Seiten dieses Bauteils viel leichter zugänglich sind, die Funktion nicht abhängig ist von der korrekten Funktion anderer Einheiten oder des Grundgehäuses, was die Wartung erleichtert und verbilligt, beispielsweise dadurch, daß einzelne Bauelemente in der Einheit leichter auswechselbar sind, da alles leichter zugänglich ist, daß außerdem der Versand eines derartigen Gehäuses an eine Spezialreparaturfirma erleichtert wird, da durch die Modulartigkeit die einzelnen Einheiten strukturell stabiler sind als einzelne Leiterplatten, die bisher als "Moduln" oder "Einheiten" in derartigen elektronischen Geräten und Computern vorgesehen sind, des weiteren ist die Empfindlichkeit derartiger gehäuseartiger Moduln oder Einheiten weniger groß als die von einzelnen Leiterplatten, da die strukturelle Stabilität einer Leiterplatte nur begrenzt ist, bei einem gehäuseartigen Modul aber beliebig gestaltet werden kann, dies deshalb, weil die Festigkeit nicht nur von einer, nur eine Ebene bildende Pressmaterialplatte abhängt, sondern die strukturelle Festigkeit durch mehrere Ebenen verwirklicht wird.

Günstig ist auch die Tatsache, daß in der gehäuseartigen Modulbauweise - selbst dann, wenn eine vollständige Umhüllung der einzelnen Modulgehäuse nicht vorgesehen ist, da diese Moduln wiederum in einem gegen Umwelteinflüsse schützenden Gehäuse unterzubringen sind - durch die strukturelle Festigkeit die dadurch mögliche größere räumliche Ausdehnung bei gleicher Festigkeit die Möglichkeit besteht, beispielsweise jeweils eigene Netzteileinheiten unterzubringen, was auf einfachen Leiterplatten problematisch werden kann.

Auch die Montage vereinfacht sich erfindungsgemäß dadurch, daß weniger auf vorsichtige Behandlung gachtet werden muß. Durch besondere Formgebung (Rücksprung in einer Wand oder Zwischenwand des Grundgehäuses, die einen Einschubraum für ein Gehäuse begrenzt) können die zwischen den Einheiten erforderlichen Kontaktleisten ohne Vergrößerung der Gesamtlänge des Grundgehäuses verwirklicht werden. Da dabei diese Steckverbindungen allseitig umschlossen sind, sind sie gegen unautorisierte Manipulationen geschützt und auch gegen andere äußere Störeinflüsse besser gesichert.

Schließlich ist es auch sehr viel einfacher, unterschiedliche Moduln miteinander zu kombinieren, da viel weniger Gleichstrompotentiale und Nachrichtenleitungsanpassungen vorgenommen werden müssen, da nur noch die Basisversorgung (wie Netzspannung) den einzelnen Moduln zugeführt wird, sowie jeweils viel weniger Signale, z. B. ein nur noch Eingangssignal und ein Ausgangssignal zu- bzw. abgeführt werden müssen. Macht man deren Anschlußimpedanzen einheitlich, wird die Verknüpfung unterschiedlicher Moduln zu neuen Aufgabenzwecken noch weiter vereinfacht.

Von Vorteil ist auch, daß infolge der nur wenigen notwendigen Verdrahtungsverbindungen die Verdrahtung auch außerhalb des Gehäuses erfolgen kann, beispielsweise durch jederzeit änderbare Steckverbindungen. Dies macht die Anwendung besonders flexibel und erlaubt eine spätere Abänderung der Aufgabenstellung durch den Benutzer.

Gemäß einer Weiterbildung der Erfindung weisen die Modulgehäuse jeweils einen Grundrahmen und einen senkrecht zu der Ebene des Grundrahmens verlaufende Wandrahmen auf. Durch diese Bauweise wird die Stabilität der beiden Rahmenteile gegenüber Verbiegung erhöht, die Montage von einzelnen Steckkarten erleichtert und die Einbringung in ein größeres Grundgehäuse und die Befestigung von wahlweise einer der beiden Seiten (Grundrahmen bzw. Wandrahmen) möglich, wobei auch noch der Vorteil sich ergibt, daß Wand- bzw. Grundrahmen festlegen und anzeigen, welche Bauhöhe die einzelnen Komponenten innerhalb dieses Rahmens haben dürfen.

Der Grundrahmen besteht vorzugsweise aus einem Rohr mit Rechteckquerschnitt oder aus einem im wesentlichen ebenen Boden (Deckel) und einem im Querschnitt U-förmigen Deckel (oder Boden), der mit seinen U-Schenkelenden am Boden (Deckel) befestigbar ist.

Von den Kanten des Bodens (Deckels) und/oder den Kanten des U-förmigen Deckels (Bodens) können Abkantungen mit Durchbrüchen ausgehen. Diese Abkantungen könnten zur Anlage und zur Befestigung von Wandrahmen der Modulgehäuse oder von Steckverbindungen dienen. Die Abkantungen können auch durch lösbare Winkel ersetzt werden.

Einzelne Bauteile können auch fest im Grundgehäuse angeordnet sein, so daß das Grundgehäuse selbst als solches ein Modulgehäuse bildet, und nur in zweiter Linie Grundgehäusefunktionen ausübt, also zur Aufnahme von weiteren Modulgehäusen dient.

Die von dem Boden (Deckel) und dem U-förmigen Deckel (Boden) freigelassenen Wandbereiche (wie Vorderseite oder Hinterseite) können durch austauschbare Frontplatten und/oder Frontblenden und/oder Wandrahmen von Modulgehäusen verschließbar sein.

Vorzugsweise weisen die einzelnen Modulgehäuse eine Grund- oder Seitenwand auf, die mit vorzugsweise vier an den Ecken angeordneten Bohrungen oder Gewindebohrungen versehen sind, um eine Befestigung mittels Befestigungsschrauben zu ermöglichen.

Es hat sich als günstig erwiesen, wenn das Modulgehäuse, das in ein Grundgehäuse einschiebbar und dort arretierbar sein soll, zum Zwekke der Arretierung an einer Kante einen lösbaren Winkel aus Metall, wie Stahlblech trägt, dessen freier Schenkel eine Verlängerung einer der an der Kante endenden Gehäuseaußenflächen bildet. Vorzugsweise verläuft der Winkel an einer Frontflächenkante (oder Hinterflächenkante), und vorzugsweise ist diese Kante senkrecht angeordnet. Dann kann der Winkel so lösbar befestigt sein, daß der freie Schenkel eine Verlängerung der Frontfläche (oder Rückwandfläche) bildet und eine Arretierung des Modulgehäuses von der Grundrahmenfrontseite (bzw. -rückwandseite) her ermöglicht, was die Montage erleichtert. Die Gehäuseaußenfläche und die Winkelfläche des Modulgehäuses kann dann z. B. einen Teil der Außenfläche des Grundgehäuses ersetzen.

Soll das Modulgehäuse aus dem Grundgehäuse herausgezogen und in einem anderen, z. B. kleinerem Gehäuse oder auch getrennt verwendet werden, kann bei Bedarf der Winkel auch, falls er stören sollte, wieder entfernt werden. Bei Montage in anderer Konstellation kann der Winkel dann auch in anderer Weise angeordnet werden.

Er kann auch Vorsprünge bilden, die in entsprechende Rücksprünge einschiebbar sind, die von dem Grundgehäuse, beispielsweise von deren Rückwand gebildet werden.

Neben dieser günstigen Ausgestaltung ist noch eine weitere Ausgestaltung von Vorteil, bei der das Grundgehäuse an einer Wand oder Zwischenwand, die einen Einschubraum für ein Modulgehäuse begrenzt, einen Rücksprung bildet, der für das in diesen Einschubraum einzubringende Modul einen Anschlag darstellt, der auch in geeigneter Weise zur Arretierung in Einschubrichtung dienen könnte, während das Herausgleiten durch eine weitere Arretierung, beispielsweise eine anschließend aufzubringende Hinterwand oder die bereits erwähnte Anbringung eines Befestigungswinkels erreichbar wäre. Noch wichtiger ist der Rücksprung in Zusammenhang mit Anbringung einer Kontaktleiste an der durch den Rücksprung gebildeten, senkrecht zur Einschubbewegung liegenden Rücksprungfläche, da derartig angeordnete Kontaktleisten nicht zu einer Verlängerung der Gesamtkonstruktion führen: da vor und hinter dieser Rücksprungfläche jeweils Gehäuseinnenraum zur Verfügung steht, können die entsprechenden Anschlüsse geschaffen werden, ohne daß dazu zusätzliche, der Kompaktheit der Gesamtanordnung abträglicher, insbesondere an der Rückseite des Grundgehäuses anzubringender Raum für Kontaktanschlüsse zur Verfügung gestellt werden müßte.

Günstig ist in diesem Zusammenhang auch die Tatsache, daß derartige Kontaktflächen im Inneren des Gehäuses angeordnet sind und dadurch gegenüber unautorisierten Manipulationen geschützt sind, wie auch gegenüber sonstigen schädlichen Einflüssen aus der Umgebung, wie Staub, mechanische Einflüsse und ähnliches.

Diese Vorteile sind auch erreichbar, wenn Grundgehäuse und Modulgehäuse im Prinzip die gleiche Tiefe aufweisen, so daß bei herkömmlicher Bauweise mit herkömmlicher Anordnung von Verbindungskontakten an den Hinterflächen zusätzlicher Raumbedarf zwangsweise entsteht.

Die Erfindung wird nachfolgend anhand von Ausführungsbeispielen näher erläutert, die in den Zeichnungen dargestellt sind.

Es zeigt:

Fig. 1   Schematisch die Art und Weise, wie mehrere Modulgehäuse in einem gemeinsamen Grundgehäuse untergebracht werden können;

Fig. 2   die Anwendung eines derartigen Gehäuses in Verbindung mit einem Tischcomputer, wobei neben dem geschlossenen Grundgehäuse, das die Zentralrecheneinheit, Netzteileinheit, Laufwerkeinheit und einen Lüfter enthält, noch die über ein Kabel damit verbundene Tastatur sowie eine auf dem Grundgehäuse aufgesetzte Bildschirmeinrichtung, ebenfalls über ein Kabel angeschlossen, erkennbar ist;

Fig. 3   schematisiert eine Ansicht auf das Grundgehäuse gemäß Fig. 2, jedoch mit abgenommener Abdeckhaube;

Fig. 4   eine praktische Ausführungsform eines Gehäuses gemäß Fig. 3, mit auseinandergezogenen Einzelteilen zur näheren Erläuterung von Grundgehäuse und Modulgehäusen;

Fig. 5   eine zu dem Grundgehäuse gemäß Fig. 4 passende alternative Frontblende;

Fig. 6   in einer auseinandergezogenen Darstellung ein aus einzelnen Bauteilen bestehendes Grundgehäuse zur Darstellung insbesondere des Rücksprungs an einer Grundgehäusezwischenwandfläche, die als Aufnahmebereich für Anschlußkontakte dienen könnte, wobei das in Fig. 6 dargestellte Gehäuse vorzugsweise zur Aufnahme des Monitors geeignet ist;

Fig. 7   in einer ähnlichen Darstellung wie Fig. 6 ein Modulgehäuse, das zur Aufnahme eines Rechners geeignet wäre und beispielsweise in einen in Fig. 6 erkennbaren, mit Rücksprung versehenen Einschubraum vor hinten einschiebbar wäre;

Fig. 8   in einer perspektiven Darstellung ein Gehäuse (z. B. für einen mit Laufwerk versehenen Computer), das in ein gestrichelt dargestelltes "Grundgehäuse" einschiebbar, und mit seitlichen Winkeln festlegbar sein kann, insoweit es ein "Modulgehäuse" wäre, hier einen Deckel und U-förmigen Boden umfassend oder selbst ein Grundgehäuse darstellt, nämlich z. B. für ein in

Fig. 9   in einer perspektivischen Darstellung wiedergegebenes "Gehäuse", daß hier ein "Modulgehäuse" für Bausteine ist, gleichzeitig aber wieder ein "Grundgehäuse" für ein in

Fig. 10   erkennbares weiteres "Modulgehäuse" darstellt, das z. B. ein Computerlaufwerk enthält.

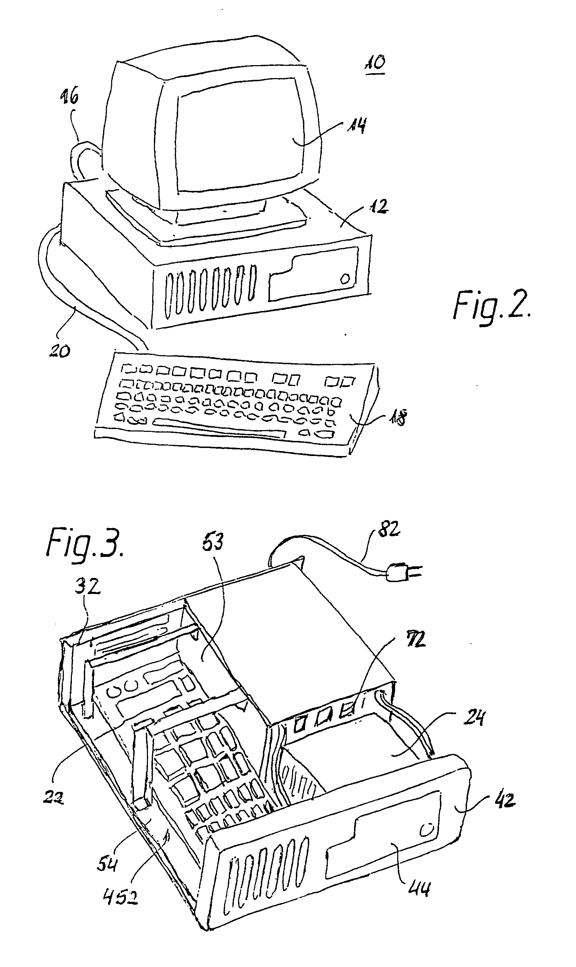

Es sei zunächst auf Fig. 2 eingegangen, die einen üblichen Tischcomputer (Personalcomputer) 10 erkennen läßt, hier bestehend aus einem auf einer Schreibtischplatte o. dgl. aufstellbaren, kastenartigen Grundgehäuse 12, in dem hier nicht dargestellten Modulgehäuse enthalten sind, einem auf dem Grundgehäuse aufgesetzten Bildschirm oder Monitor 14, der über ein Kabel 16 mit dem Grundgehäuse 12 verbunden ist und auch unabhängig von diesem Grundgehäuse 12 an einer anderen Stelle aufgestellt werden kann. Des weiteren ist noch eine Tastatur 18 zur Eingabe von Daten und Steuerungsbefehlen zu erkennen, die ebenfalls über ein Kabel 20 mit in dem Grundgehäuse 12 untergebrachten Mikroprozessor- und sonstigen Computereinrichtungen in Verbindung steht und infolge der Trennung von dem Grundgehäuse 12 ebenfalls frei aufstellbar und von dem Benutzer an einem für ihn möglichst bequemen Platz aufstellbar ist.

Nach außen hin unterscheidet sich die Anordnung gemäß Fig. 2 nicht von üblichen Anordnungen.

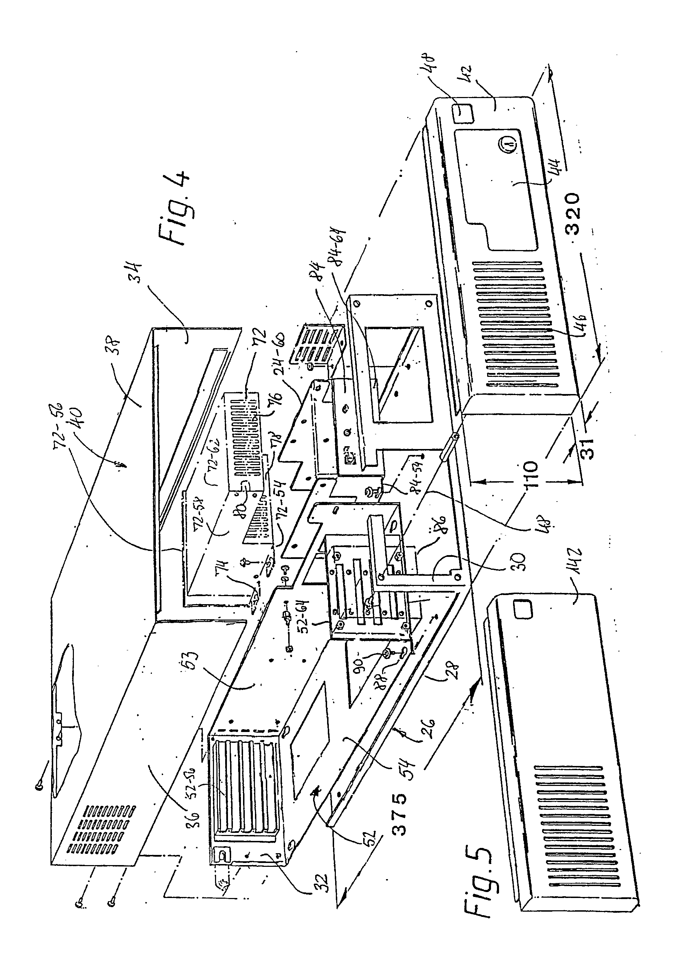

Entfernt man eine Abdeckhaube von dem Grundgehäuse 12, wird sichtbar, wie das Innere des Gehäuses 12 aufgebaut sein kann, siehe Fig. 3. Zieht man diese einzelnen Teile auseinander, entfernt dabei bestimmte Bauteile zur Erhöhung der Klarheit, wie die mit elektronischen Bauteilen bestückten Steckkarten 22 und ein Laufwerkmodul 24 und die Kabelverbindung innerhalb des Gehäuses, ergibt sich die Darstellung gemäß Fig. 4. Aus den Fig. 3 und 4 ergibt sich dabei folgendes: Das Gehäuse 12 besteht aus einem Grundgehäuse 26 mit Gehäuseboden 28, Grundgehäusefrontwandrahmen 30, sowie ein Grundgehäuseseitenwände 34, 36 sowie eine Grundgehäuseoberseite 38 umfassendes Oberteil 40.

Auf den Grundgehäusefrontrahmen 30 ist eine Frontblende 42 mit "Floppy-Zugangsöffnung" 44 und Lüftungsschlitzen 46 sowie einem Hauptschalter 48 verbindbar, oder alternativ beispielsweise eine Frontblende 142 (siehe Fig. 5) die den Floppy-Zugang 44 beispielsweise nicht aufweist, im übrigen aber genau den gleichen Aufbau aufweist, insbesondere mit den gleichen Befestigungspunkten ausgestattet ist, so daß die Frontblende 144 gegen die Frontblende 44 ohne weiteres ausgetauscht werden kann, beispielsweise dann, wenn in dem Grundgehäuse 12 ein Floppy-Laufwerk nicht vorhanden ist, wobei lediglich vier Schrauben 48 an den vier Ecken des Grundplattenwandrahmens 30 bzw. der Frontblende 42 oder 142 gelöst werden müssen.

In Fig. 1 ist das Grundgehäuse 12 in schematisierter Darstellung von einer anderen Blickrichtung (von hinten) nochmals dargestellt, ebenso ist eine an der Vorderfront dieses Grundgehäuses 12 mittels vier Schrauben 48 befestigbare Vorderwand oder auch Frontblende 242 zu erkennen, mit zusätzlichen Bohrungen 50 zur zusätzlichen Anbringung von beispielsweise Haltegriffen, falls es sich um ein Gehäuse handelt, das seinerseits in ein größeres Schrankgestell einschiebbar sein soll. In diesem Falle wäre das Grundgehäuse 12 mit Bezug auf einen derartigen Gehäuseschrank wiederum ein Modulgehäuse, d. h. eine Untergehäuseeinheit, die nur Teil eines größeren Gehäuseverbandes ist. In das dargestellte Grundgehäuse 12 kann nun von (ggf. auch seitlich oder von vorn) hinten ein beispielsweise ein Rechnermodul mit Laufwerk darstellendes Gehäusemodul 52 eingeschoben werden, wobei das Modulgehäuse, wie erkennbar, zumindest zwei Seiten, hier Bodenseite 54 und Rückseite 56 aufweist, wobei das Grundgehäuse 12 für die hier nur als Kasten 58 dargestellten "Innereien" dieses Moduls die mechanische und elektrische Schutz- und Abschirmfunktion übernehmen kann. Fig. 3 zeigt eine ähnliche Aufbauweise mit Bezug auf einen Einschub 452, der ebenfalls aus einer Grundplatte 54 sowie einer dazu senkrecht verlaufenden weiteren Wand, hier ist es eine Seitenwand 53 besteht. Weitere Umfassungen sind für die einzelnen von diesem Modulgehäuse gehaltenen elektronischen Bauteile nicht vorgesehen, also beispielsweise keine diese Bauteile unmittelbar schützenden Wände, wie es die Fig. 1 zeigt, wo, zumindest schematisch, neben der Bodenseite 54 und der Rückseite 56 noch Seitenwände 58, 60, eine Oberseite 62 und eine Vorderwand (nicht erkennbar) 64 vermutet werden kann und möglicherweise auch in bestimmten Anwendungsfällen vorhanden ist. Befestigt wird das Modul 52 nach seinem Einschieben in das Grundgehäuse 12 mittels hier zweier Schrauben 148, die durch einen vorspringenden Rand der Rückseite 56 hindurchgeführt und von in einer flanschartigen Abkantung 66 des Grundrahmens 12 angeordneten Gewindebohrungen aufgenommen werden können.

In ähnlicher Weise ist noch ein weiterer Gehäusemodul 152 zu erkennen, beispielsweise umfaßt dieser ein Kathodenstrahlrohr 68 als Bildschirmanzeige, wobei dieser Gehäusemodul 152 wiederum zwei zueinander senkrecht stehende Wände aufweist, eine Rückwand 156, eine Bodenwand 154 sowie ggf. wiederum Seitenwände 158 und eine geknickte Oberseite 152. Befestigung erfolgt wieder ähnlich wie bei dem Modul 52 mittels durch die Hinterwand geführter Schrauben 148, die in Gewindebohrungen im Flansch 66 des Grundgehäuses eingeschraubt werden können.

Die beiden Hinterwände 56, 156 der beiden Moduln 52, 152 bilden in diesem Ausführungsbeispiel somit die Rückwand des Grundgehäuses 12, so daß dieses Grundgehäuse 12 keine eigene Rückwand benötigt, gleichwohl aber zusätzlich haben kann. Ebenso könnten die Vorderwände 64 bzw. 164 die Frontblende 242 entbehrlich machen, falls diese Vorderwände ausreichend stabil sind und ästhetisch befriedigen. Hier ist, wie dargestellt, zusätzlich eine Frontblende 242 vorgesehen, die das Grundgehäuse 12 an seiner Vorderfläche abdeckt, gleichwohl aber Durchbruchsöffnungen freiläßt, eine Öffnung 70, um den Bildschirm 68 für den Benutzer sichtbar werden zu lassen, und eine ggf. vorhandene weitere Öffnung 72, falls es sich bei dem Modul 52 um einen Rechner handelt, der ein eigenes Laufwerk besitzt, das von vorne zugänglich sein muß. Dies ist auch der Fall bei der Ausführungsform gemäß Fig. 3, wo ein modulartiges Laufwerk 24 eine eigene Einheit bildet, die über eine Schiebetür zugänglich gemacht werden kann.

Einige weitere Einzelheiten lassen sich der auseinandergezogenen Darstellung gemäß Fig. 4 noch entnehmen. So ist dort ein modulartiges Netzteil 72 zu erkennen, das eine Grundseite 72-54 mit Befestigungslaschen 74 und Rückwand 72-56 erkennen läßt, außerdem Seitenwände 72-58 und eine Oberseite 72-62 sowie perforierte Wandteile 76, 78, die die Abfuhr von in einem Netzteil üblicherweise entstehender Wärme in das Grundgehäuse 12 ermöglichen, gleichzeitig aber auch eine elektrische Abschirmung gegen die Abstrahlung von Störwellen bilden. Es ist ein Durchbruch 80 zu erkennen, aus dem hier nicht dargestellte Kabel herausführen, um Betriebsenergie an andere Moduln innerhalb des Grundgehäuses 12 sowie an weitere angeschlossene Geräte, wie Bildschirm 14 oder Tastatur 18 zu liefern. Eine Netzzuleitung wird zweckmäßigerweise von hinten über die Rückwand 72-56 vorgesehen und ist hier nicht erkennbar, aber in Fig. 3 als Anschlußleitung 82 dargestellt. Vor diesem Netzteil 72 ist das Laufwerk 24 (siehe Fig. 3) angeordnet, wobei in Fig. 4 nur die zugehörigen Seitenwände, beispielsweise 24-60, zu erkennen sind. Außerdem vorhanden ist hier noch ein Bedienungsmodul 84, der beispielsweise mit dem Laufwerkmodul 24 in Verbindung stehen kann, aber beispielsweise auch als eigenes Modul konzipiert ist und wiederum eine Vorderwand 84-64 und eine Bodenseite 84-54 aufweist, welche wiederum mit dem Grundgehäuse 26 verschraubt werden kann. Auf der Vorderwand 84-64 befinden sich hier nicht näher bezeichnete Schalter und Steckelemente, die über die Durchbruchsöffnung 44 zugänglich sind, ebenso wie der Zufuhrschlitz für den Einschub von Laufwerkspeichermedien.

Die zweite Hälfte des Grundgehäuses gemäß Fig. 4 wird ausgefüllt von einem hier als Rechnermodul wirkenden Modul 152, mit wiederum einer Bodenseite 54, eine davon einstückig weggebogenen Seitenwandseite 53, an welchen beiden Wänden Befestigungsmittel für Steckkarten getragen werden, welche Steckkarten außerdem von der ebenfalls mit dem Modul 152 gebildeten Rückseite 52-56 und der Vorderwand 52-64 gehalten werden. Diese Vorderwand 52-64 trägt einen weiteren Modul, der hier nur gestrichelt dargestellt ist und die Bezugszahl 86 aufweist. Dieser Modul umfaßt einen Axiallüfter und ist mit seiner Rückseite an der durchbrochenen Wand 52-64 befestigt, während seine Vorderseite in den Bereich eines Durchbruchs im Grundgehäusewandrahmen 30 sowie im Bereich der Durchbrüche 46 der Frontblende 42 zu liegen kommt und daher in der Lage ist, Kühlluft durch diese Öffnungen in den Bereich von waagerecht angeordneten Steckplatten zu drücken, die zwischen den Wänden 52-56 und 52-64 angeordnet sind.

Das Modulgehäuse 52 weist wiederum vier Durchbrüche 88 auf, hier in Schlüssellochform, um mittels Schrauben 90 diesen Modul am Grundgehäuse festlegen zu können. Ähnlich ist, wie erkennbar, Modul 24 mit derartigen schlüssellochartigen Durchbrüchen versehen, die jedoch dort mit einer Bezugszahl nicht bezeichnet sind.

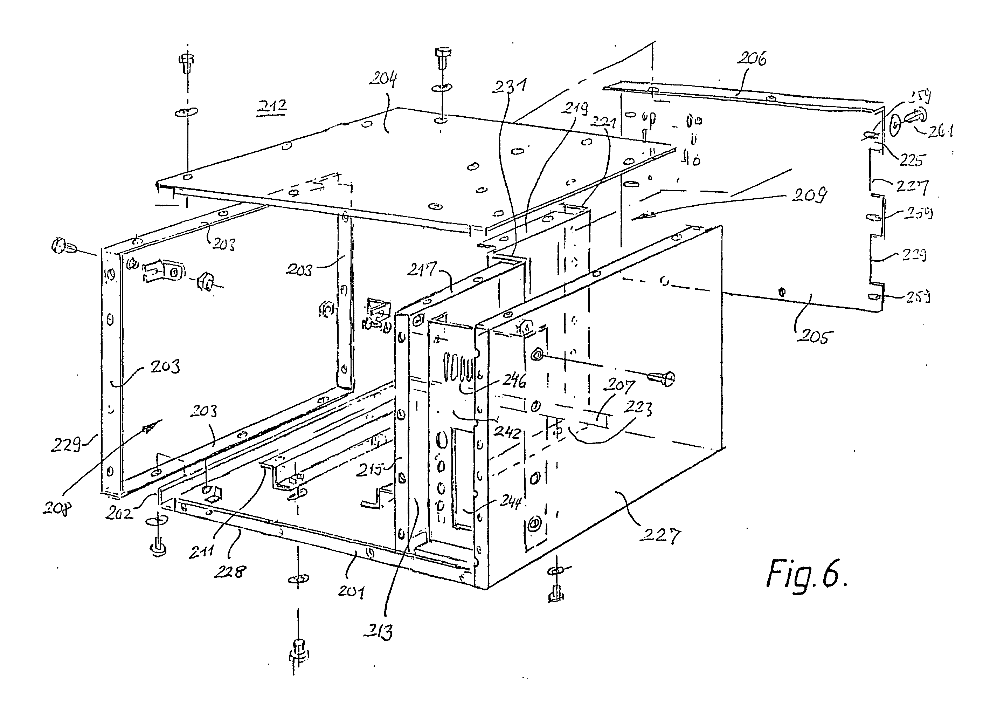

In Fig. 6 ist in einer auseinandergezogenen Darstellung ein aus einzelnen Bauteilen bestehendes, vorzugsweise als Grundgehäuse dienendes Gehäuse für einen Monitor zu erkennen, vom Prinzip her ähnlich der in Fig. 1 dargestellten Anordnung, wobei jedoch die Frontplatte und die in Fig. 1 erkennbaren Einschübe hier nicht dargestellt sind. Das Grundgehäuse, das hier die Bezugszahl 212 trägt, besteht aus einer Bodenplatte 228, die zur Vorderseite hin eine Abkantung 201 und an den Seiten Abkantungen 202 trägt, wobei die Abkantung 201 mit beispielsweise Gewindebohrungen versehen ist, um eine hier nicht dargestellte Frontplatte festschrauben zu können. Die Abkantung 202 dient als Anlage für den unteren Bereich der Seitenwand 229 (entsprechendes gilt für die Seitenwand 227), welche Seitenwand wiederum versteifende und eine Anbringung an andere Bauteile erleichternde Abkantungen 203 besitzt. Eine dieser Abkantungen weist wiederum beispielsweise Gewindebohrungen zur Aufnahme von Befestigungsschrauben für die Fontplatte auf, andere dienen zur Verschraubung der Deckelplatte 204.

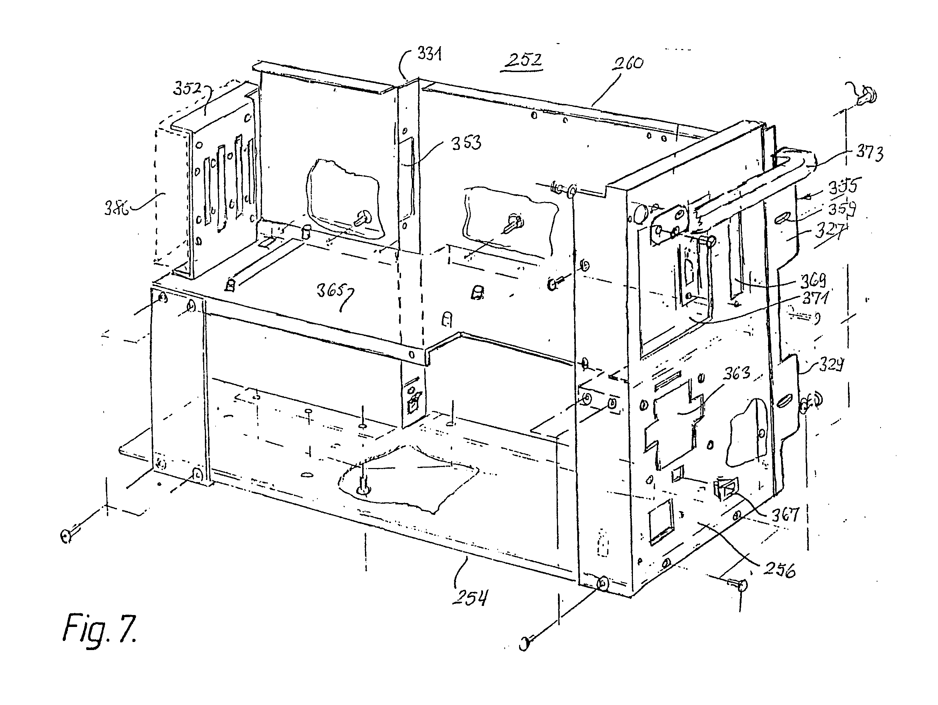

Die Hinterseite wird von einer Hinterplatte 205 verschlossen, die nur eine obere Abkantung 206 trägt, im übrigen aber randnahe Bohrungen aufweist, durch die Befestigungsschrauben gesteckt werden können, die ihrerseits in Abkantungen 203 der Seitenwände 229, 227 sowie in eine Abkantung 207 eingeschraubt werden können, welche letztgenannte Abkantung 207 von der Bodenplatte 228 ausgeht, welche Abkantung aber nicht über die gesamte Erstreckung verläuft, sondern nur im Bereich des Monitoreinschubraumes 208, nicht dagegen im Bereich des Rechnereinschubraumes 209. Der Monitor wird z. B. von vorne in das Gehäuse 212 eingeschoben (er kann auch von hinten eingeschoben werden) und steht dabei auf Schienen 211, so daß die hier befindliche Abkantung 201 beim Einschubvorgang nicht stört. Das von hinten in den Raum 209 einzuschiebende Rechnermodulgehäuse, das in Verbindung mit Fig. 7 noch näher beschrieben wird, wird jedoch auf die Bodenplatte 228 direkt aufgesetzt und bildet auch seine eigene Rückwand, so daß die Rückwand 205 auch nur den Raum 208 für den Monitor abschließt, nicht dagegen den Raum 209. Wie die Darstellung erkennen läßt, ist eine Zwischenwand 213 vorhanden, die den Raum 208 von dem Raum 209 trennt, gleichfalls Abkantungen aufweist, beispielsweise 215 zur Befestigung einer Frontplatte (nicht dargestellt), 217, 219 zur Verbindung mit der Deckelplatte 204, 221 mit der rechten Kante 225 (die Einschnitte 227, 229 für entsprechende Vorsprünge 227, 329 eines Haltwinkels des Rechnermoduls gemäß Fig. 7 aufweist) und 223 zur Befestigung an der Bodenplatte 228.

Außerdem besitzt diese Zwischenwand 213 noch eine "Verkröpfung" oder einen Rücksprung 231, die eine Aufnahmefläche für Kontaktleisten zur Verbindung der Schaltungseinrichtungen des Monitors mit den Schaltungseinrichtungen des Computers zur Verfügung stellt, wobei die für die Kontaktleisten notwendigen Anschlüsse einerseits in den Monitorraum 208 hineinragen, andererseits in den Computerraum 209, und zwar jeweils in der Weise, daß z. B. vorstehende Kontaktleisten in den Raum 208 bzw. 209 hineinragen und beim Einschieben eines in diesen Raum einzuschiebenden Moduls (wie Monitor in den Monitorinnenraum 208 oder Computer in den Computerinnenraum 209) in entsprechende Buchsenleisten des Monitors bzw. des Computers eindringen und dadurch automatisch eine Kontaktherstellung bewirken, ohne daß noch Stecker gesteckt oder sonstige, die Montage verkomplizierenden Handlungen vorgenommen werden müßten. Da diese vorspringenden Bauteile jeweils in einen sowieso vorhandenen Einschubraum hineinragen, wird auch kein zusätzlicher, beispielsweise nach hinten anzusetzender Zusatzraum erforderlich.

Das in den Raum 209 gemäß Fig. 6 einschiebbare Modulgehäuse 252 ist in Fig. 7 in einen etwas vergrößerten Maßstab dargestellt. Es umfaßt eine Bodenseite 254 und eine Rückseite 256, die, wie bereits erwähnt, bezüglich des Grundgehäuses gemäß Fig. 6 eine Ergänzung der Rückwand 205 bildet und mit dieser zusammen die Gesamtrückwand des Gehäuses 212 bildet. Von besonderem Interesse ist hier zum einen wiederum ein Rücksprung 331 an der einen Seitenwand 260, welcher Rücksprung eine senkrecht zur Einschubrichtung liegende Aufnahmefläche für Kontaktleisten und ähnliches bildet, für welchen Zweck in dieser Fläche ein Durchbruch 353 vorgesehen ist, in die eine Kontaktstiftleiste montiert werden kann, welche einerseits mit elektronischen Bauteilen dieses Rechnermoduls in Verbindung steht, andererseits mit einer entsprechenden Kontaktbuchsenleiste beim Einschieben des Moduls 252 in den Raum 209 in elektrische Verbindung tritt, die auf der Fläche 231 gemäß Fig. 6 montiert sein mag.

Von Bedeutung ist auch der an der rechten, senkrechten Hinterkante des Modulgehäuses 252 lösbar befestigte Winkel 355, der dann, wenn dieses Modul 252 selbständig benutzt werden soll, abnehmbar ist, zum Zweck der Montage innerhalb des Grundgehäuses 212 jedoch vorgesehen wird, und mit seinen vorspringenden Bereichen 227 bzw. 329, die auch Langlöcher 359 aufweisen, in entsprechende Rücksprünge 227, 229 eingefahren werden können, die von der entsprechend liegenden Kante des Hinterwandbleches 206 gemäß Fig. 6 gebildet werden. Damit kann sowohl das Hinterblech 206 mit seinen entsprechenden Langlöchern 259 als auch gleichzeitig dieser Winkel mit seinen Langlöchern 359 mit entsprechenden Befestigungsschrauben 261, die zum Grundgehäuse gehören, an der Abkantung 221 der Zwischenwand des Grundgehäuses festgelegt werden. Gleichzeitig bildet die von den Vorsprüngen 327, 329 und den Rücksprüngen 227, 229 gebildete Verzahnung eine besonders stabile gegenseitige Verrastung der Gehäuseteile.

Daß die Rückwand 256 des eingeschobenen Modulgehäuses gleichzeitig auch Rückwandteil des Grundgehäuses 212 bildet, hat verschiedene Vorteile: Zum einen wird Material eingespart, zum anderen brauchen in einem eventuell vorhanden gewesenen Rückwandbereich des Grundgehäuses nicht entsprechende Durchbrüche vorgesehen werden, die beispielsweise für ein Lüftergebläse vorgesehen werden müßten, das an dem Durchbruch 363 vorgesehen sein kann, um die untere Hälfte des durch eine waagerechte Zwischenwand 365 geteilten Moduls mit Kühlluft zu versehen. Entsprechendes gilt für einen Schalter 367, der in der Rückwand 256 in einem entsprechenden viereckigen Loch montiert sein kann und einen Hauptschalter bilden könnte und für den kein zweiter Durchbruch in einer hier eben nicht benötigten zusätzlichen Rückwand vorgesehen werden muß.

Auch ist hier wiederum bin Durchbruch 369 für die Anbringung einer Steckkontaktleiste zu erkennen, falls nach außen hin vorzusehene Anschlüsse hier einsteckbar sein sollen. Gleiches gilt für eine weitere Durchbruchöffnung 371, die ebenfalls zum Einbau von Steckkontaktleisten zur Verbindung dieses Moduls mit der "Außenwelt" vorgesehen sein kann. Desweiteren ist ein Haltegriff 373 zu erkennen, der an der Platte 256 anschraubbar oder einhängbar ist.

Im Prinzip hat dieser Einschub gemäß Fig. 7 Ähnlichkeit mit der Anordnung, wie sie in Fig. 4 zu erkennen ist, wobei der Modulcharakter wieder hervortritt: Die Gesamtanordnung gemäß Fig. 4 entspricht, wenn man sie hochkant stellt, der Anordnung gemäß Fig. 7, wobei die Zwischenwand 53 gemäß Fig. 4 der Zwischenwand 365 entsprechen würde. Die Grundplatte 52 gemäß Fig. 4 wäre dann entsprechend die Seitenwand 260 gemäß Fig. 7. Der Durchbruch 371 wäre für das Bauteil 52-56 gemäß Fig. 4 vorzusehen, und das Bauteil 52-64 gemäß Fig. 4 findet sich wieder als Bauteil 352, an dem auch hier wieder ein Lüfter 386 montierbar ist, der den oberen Gehäuseraum des in Fig. 7 dargestellten Einschubmoduls mit Kühlluft versorgt und diese über Schlitze im Bauteil 352 sowie auch über Schlitze 246 einer Frontplatte 242 bezieht, die in Fig. 6 zu erkennen ist und die den Raum 209 nach vorne hin abschließt. Diese Frontplatte 242 besitzt wiederum einen Durchbruch 244 als Zugang für Magnetspeicherplatten, die in einen entsprechendes Magnetplattenlesegerät eingeschoben werden können, das im unteren Teil des Gehäuses gemäß Fig. 4 an dessen linken Ende montiert sein mag.

Ähnlich wie bei der Gestaltung gemäß Fig. 4 kann dann dahinter ein Netzgerät angeordnet sein, während im oberen Bereich oberhalb der Platte 265 die Bauteile angeordnet sind, beispielsweise Schaltungsplatten mit den Mikroprozessorbauteilen des Computers, die gemäß Fig. 4 auf der linken Seite des Gehäuses angeordnet sind.

Auch hier wird erkennbar, wie eine Grundkonstruktion verschiedenartig einsetzbar ist, was, wie bereits erwähnt, Kostenvorteile und auch Wartungsvorteile hat, da der Wartungsfachmann aufgrund der immer ähnlich bleibenden Struktur der einzelnen Module für Wartungsarbeiten weniger Informationen benötigt, als es sonst der Fall wäre.

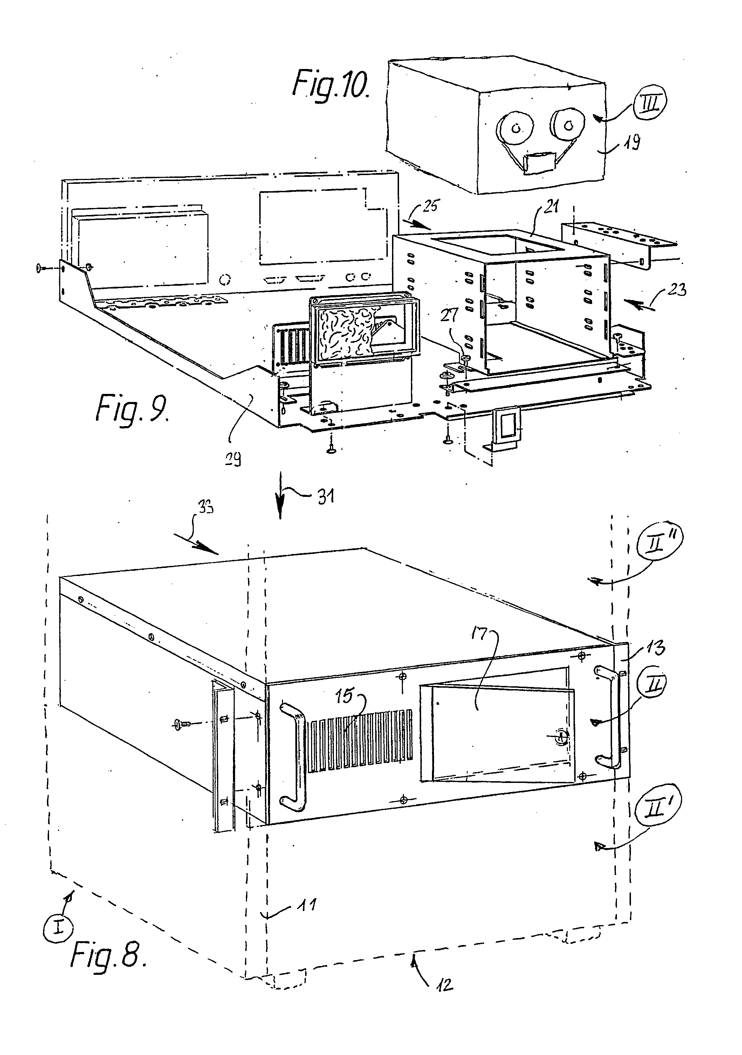

In Fig. 8 ist ein (gestrichelt angedeutetes) Grundgehäuse 12 (oder auch Modulgehäuse I einer noch größeren Einheit) zu erkennen, mit seitlichen Befestigungsprofilen 11, an die ein Modulgehäuse II mittels Befestigungswinkeln 13 anbringbar ist, ggf. mit weiteren Modulgehäusen II', II'' usw..

Das Modulgehäuse II (das Lüfterschlitze 15 und eine Zugangstür 17 für z. B. den Zugang zu einer Laufwerkeinheit 19, Fig. 10, erkennen läßt) stellt wiederum ein "Grundgehäuse" für ein Modulgehäuse III dar, das in Fig. 10 dargestellt ist und z. B. ein Laufwerk umfaßt, das in einen Rahmen 21 von vorne (Pfeil 23) oder hinten (Pfeil 25) einschiebbar ist. Der Rahmen 21 ist entfernbar (siehe Schrauben 27) an einen anderen, größeren Rahmen 29 befestigt, der wiederum von oben (Pfeil 31) oder hinten (Pfeil 33) in das Modulgehäuse II einschiebbar ist.

Der Rahmen 21 trägt weitere Baueinheiten, die hier aber nicht erläutert werden und zum größten Teil auch nicht dargestellt sind.

**Patentansprüche**

1. Tisch-, Stand oder Schrankcomputergehäuseanordnung (10) mit ggf. getrennter Tastatur (18) und Bildschirmeinrichtung (14), bestehend aus mehreren, in einem Tisch-, Stand- oder Schrankgehäuse (Grundgehäuse) (12) untergebrachten Einheiten, wie Zentralrecheneinheit, Netzteileinheit, Laufwerkeinheit, Anzeigeeinheit, Lüftereinheit, Bedienungseinheit, Tastatureinheit, Lautsprechereinheit, und dgl., dadurch gekennzeichnet, daß ein oder mehrere, in dem Grundgehäuse (12) untergebrachte Einheiten (wie Netzteileinheit 72, Rechnereinheit 52, Laufwerkeinheit 24, Lüftereinheit 86, Bedienungseinheit 84) jeweils wieder in einem eigenen Gehäuse (Modulgehäuse) untergebracht sind, wobei das Grundgehäuse (12) so aufgebaut ist, daß Modulgehäuse von zumindest zwei Seiten (wie Vorderseite und Rückseite) in das Grundgehäuse einschiebbar sind (Fig. 1), wobei das Grundgehäuse (12) die Schutz- und Sicherungsfunktion gegen Umwelteinflüsse und unbefugte Betätigung, und die Modulgehäuse die mechanische Befestigung für die einzelnen Bauelemente (wie Steckplatten, Laufwerke, Transformatoren) und Verdrahtungselemente (wie Kabel, Steckverbindungen) liefern, und daß die in einem Modulgehäuse angeordnete Einheit so vollständig ausgestattet ist, daß ein Betrieb, wie Testbetrieb unabhängig von anderen Einheiten oder dem Grundgehäuse durchgeführt werden kann.

2. Anordnung nach Anspruch 1, dadurch gekennzeichnet, daß die Modulgehäuse (z. B. 52) jeweils einen Grundrahmen (z. B. 54) und eine senkrecht zu der Ebene des Grundrahmens (z. B. 54) verlaufenden Wandrahmen (z. B. 56) aufweisen.

3. Anordnung nach Anspruch 1 oder 2, dadurch gekennzeichnet, daß der Grundrahmen ein Rohr mit Rechteckquerschnitt bildet oder aus einem im wesentlichen ebenen Boden (z. B. 28) und einem im Querschnitt U-förmigen Dek-kel (40) besteht, wobei die U-Schenkel Grundgehäuseseitenwände bilden, und daß mit den U-Schenkelenden der Deckel am Boden (28) befestigbar ist.

4. Anordnung nach Anspruch 3, dadurch gekennzeichnet, daß von Abkantungen des Bodens und/oder von Abkantungen (66) des U-förmigen Deckels (40) flanschartige Anlageflächen zur Befestigung von eingeschobenen Moduln (52, 152) gebildet werden.

5. Anordnung nach Anspruch 4, dadurch gekennzeichnet, daß die Abkantungen (66) Gewinde-bohrungen zur Aufnahme von Befestigungs-schrauben (148) oder ähnlichen Befestigungs-mitteln dienen, die durch Bohrungen in Wandvorsprüngen von Rückseitenwänden (56, 156) eingeschobener Moduln hindurchgeführt sind.

6. Anordnung nach einem der Ansprüche 1 bis 5, dadurch gekennzeichnet, daß zwischen von vorne oder von hinten in das Grundgehäuse (12) einschiebbaren Moduln (54, 156) fest im Grundgehäuse eingebaute Moduln vorgesehen sind.

7. Anordnung nach einem der Ansprüche 3 bis 6, dadurch gekennzeichnet, daß die von Boden (28) und dem U-förmigen Deckel (40) des Grundgehäuses (12) freigelassene Wandbereiche (wie Frontseite oder Rückseite) durch austauschbare Frontplatten (42; 142; 242) und/oder von Wandrahmen (56, 156) von Modulgehäusen (52, 152) verschließbar sind.

8. Anordnung nach einem der Ansprüche 1 bis 7, dadurch gekennzeichnet, daß die Modulgehäuse so bestückt sind, daß die von ihnen getragenen Schaltungen oder Anordnungen zu Test- und Reparaturzwecken eigenständig in Betrieb genommen werden können.

9. Anordnung nach einem der Ansprüche 1 bis 8, dadurch gekennzeichnet, daß das Grundgehäuse (12) mit Bezug zu einem anderen Grundgehäuse ein Modulgehäuse darstellt.

10. Anordnung nach Anspruch 1, dadurch gekennzeichnet, daß das Modulgehäuse (252) an einer Kante einen lösbaren Winkel (355) aus Metall, wie Stahlblech, trägt, dessen freier Schenkel eine Verlängerung einer der an der Kante endenden Gehäuseaußenfläche (256) bildet und eine Arretierung des Modulgehäuses (252) in einem Grundgehäuse (212) ermöglicht.

11. Anordnung nach Anspruch 10, dadurch gekennzeichnet, daß der Winkel Vorsprünge (327, 329) bildet, die in entsprechende Rücksprünge (227, 229) einschiebbar sind, die von dem Grundgehäuse, beispielsweise von deren Rückwand (205) gebildet werden.

12. Anordnung nach Anspruch 11, dadurch gekennzeichnet, daß die Gehäuseaußenfläche und die Winkelfläche des Modulgehäuses einen Teil der Außenfläche des Grundgehäuses ersetzen.

13. Anordnung nach Anspruch 1, dadurch gekennzeichnet, daß das Grundgehäuse (212) an einer Wand oder Zwischenwand (213), die einen Einschubraum (209) für ein Modulgehäuse (z. B. gemäß Fig. 7) begrenzt, einen Rücksprung (231) bildet, der einen Anschlag für die Einschubbewegung eines in den Einschubraum (209) einzubringenden Moduls bildet.

14. Anordnung nach Anspruch 13, dadurch gekennzeichnet, daß die senkrecht zur Einschubbewegung liegende Rücksprungfläche (231) Kontaktstiftleisten oder Kontaktbuchsenleisten trägt, die mit entsprechenden Kontaktbuchsenleisten bzw. Kontaktstiftleisten in Verbindung treten können, die an dem in den Einschubraum einbringbaren Modulgehäuse an seiner Außenwand, insbesondere einer Rücksprungfläche (331) dieser Außenwand gehalten sind.

Fig. 1.

Fig.2.

Fig.3.

Fig. 4

Fig. 5

Fig.6.

Fig. 7.

Fig.10.

Fig. 9.

Fig. 8.